Europäisches Patentamt

European Patent Office

Office européen des brevets

(11) Veröffentlichungsnummer: **0 230 220 A1**

# EUROPÄISCHE PATENTANMELDUNG

(21) Anmeldenummer: 87100013.9

(22) Anmeldetag: 02.01.87

(51) Int. Cl.⁴: **C 04 B 41/48,** C 04 B 26/04, C 09 D 3/00 // C08L31/04 ,(C04B26/04, 14:28, 14:30, 18:24, 24:38)

(30) Priorität: 10.01.86 DE 3600576

(43) Veröffentlichungstag der Anmeldung: 29.07.87 Patentblatt 87/31

(84) Benannte Vertragsstaaten: AT CH FR GB LI NL SE

(71) Anmelder: Stotmeister GmbH, D-7894 Stuhlingen-Weizen (DE)

(72) Erfinder: Pieper, Karl, Amselweg 12, D-7894 Stühlingen-Weizen (DE)
Erfinder: Grochal, Peter, Dr. rer. nat., Dipl.-Chem., Bioisstrasse 90, D-7890 Waldshut-Tiengen 1 (DE)
Erfinder: Güntert, Manfred, Breitenfeldstrasse 1, D-7894 Stühlingen-Weizen (DE)

(74) Vertreter: Patentanwälte Leinweber & Zimmermann, Rosental 7/II Aufg., D-8000 München 2 (DE)

(54) Baustoff-Beschichtungsmaterial.

(57) Das pulverige Beschichtungsmaterial dient dem Beschichten von Baustoffen. Es besteht aus einem Gemisch aus Zuschlagstoffen, wie Füllstoffen, Pigmenten, Benetzungsmitteln und einem Entschäumer, aus einem organischen Bindemittel und aus einem Verdickungsmittel. Das schadstofffreie, umweltfreundliche Beschichtungsmaterial ist dadurch gekennzeichnet, dass unter Ausschluss von mineralischen abbindenden Bindemitteln, wie z.B. Zement, Kalk, Gips oder Wasserglas 5 bis 70 Gew.-% eines pulverigen organischen Bindemittels mit einer natürlichen Filmbildtemperatur unter 10°C, vorzugsweise unter 10°C, vorzugsweise unter 5°C, und 0,1 bis 3 Gew.-% Xanthan-Gum oder Guar-Derivat als Verdickungsmittel aus Polysaccharidbasis Anwendung finden.

EP 0 230 220 A1

0230220

Baustoff-Beschichtungsmaterial

Die Erfindung bezieht sich auf ein pulveriges Baustoff-Beschichtungsmaterial, das nach Beigabe von Wasser unter Bildung
einer Dispersion zum Beschichten von Baustoffen  verwendbar ist
und ein organisches Bindemittel mit einer natürlichen Filmbildungstemperatur unter 10 °C, ein Verdickungsmittel auf Polysaccharidbasis und Zuschlagstoffe enthält.

Beschichtungsmaterialien dieser Art sind bereits bekannt (H. Kittel "Lehrbuch der Lacke und Beschichtungen" Bd. 1, Teil 3, 1974). Diese Materialien auf Dispersionsbasis enthalten bekanntlich kleine Mengen anorganischen Lösungsmitteln. Ferner hat sich der Einsatz von Konservierungsmitteln als notwendig herausgestellt. Mit dem in der Bevölkerung zunehmenden Umweltbewußtsein sind diese Beschichtungsstoffe in den Vordergrund der öffentlichen Kritik geraten. Es werden deshalb immer mehr Beschichtungsmaterialien verlangt, die möglichst völlig frei von Schadstoffen jeglicher Art sind. Von dieser Forderung sind vor allem Produkte betroffen, die im Innenbereich verwendet werden.

Der Erfindung liegt die Aufgabe zugrunde, die Formulierung von Beschichtungsmaterialien so abzuwandeln, daß einerseits die guten Eigenschaften der bisher bekannten Materialien beibehalten werden, andererseits in ihnen jedoch keine schädlichen Bestandteile enthalten sind oder von ihnen freigesetzt werden.

Der Erfindung liegt deshalb die Aufgabe zugrunde, das Beschichtungsmaterial der eingangs genannten Art so weiter zu entwickeln, daß es keine Lösungsmittel oder flüchtige Bestandteile enthält, sowie frei von Konservierungsmitteln ist und dennoch dem heutigen Standard der Kunstharzbeschichtungen voll entspricht.

Das Beschichtungsmaterial, bei dem die genannte Aufgabe gelöst ist, zeichnet sich im wesentlichen dadurch aus, daß zur ausschließlichen Beigabe von Wasser ohne sonstige Lösungsmittel unter Ausschluß von mineralisch abbindenden Bindemitteln, wie z.B. Zement, Kalk, Gips oder Wasserglas sowie von Konservierungsmitteln 5 bis 70 Gew.% des pulverigen organischen Bindemittels und 0,1 bis 3 Gew.-% Xanthan-Gum oder Guar-Derivat als

0230220

Verdickungsmittel Anwendung finden.

Dieses Beschichtungsmaterial läßt sich allein durch Zufügen von Wasser klumpenfrei verrühren und so in den die Verarbeitung erlaubenden Zustand überführen. Als besonderer Vorteil hat sich gezeigt, daß es unerheblich ist, ob das Anmachwasser zu der erfindungsgemäßen Pulvermischung oder umgekehrt zugegeben wird. Mineralisch abbindende Bindemittel wie z.B. Kalk, Zement oder Wasserglas gelangen ebenso wenig zur Anwendung wie organische Lösungsmittel oder Konservierungsmittel. Nach dem Verrühren der pulverigen Mischung mit Wasser bleibt die einsatzbereite gebrauchsfertige Masse frei von Konservierungsmitteln mindestens 7 Tage lagerstabil und verarbeitbar. Eine Abtönung läßt sich mit gewöhnlichen pulverigen anorganischen und /oder organischen Pigmenten bzw. Abtönpasten durchführen. Da die Beschichtungen gemäß der Erfindung schadstoffrei und geruchlos sind, erlauben sie deshalb eine Applikation auch bei vollem Betrieb, z.B. in Schulen, Kindergärten, Krankenhäusern oder Altersheimen.

Als sehr zweckmäßig hat es sich herausgestellt, wenn als pulveriges, organisches Bindemittel ein Copolymer des Vinylacetats, Vinylversatats, Vinyllaurats oder Acryl- bzw. Methacrylester eingesetzt wird. Struktureinheiten der Monomeren Vinylchlorid, Acrylnitril, Butadien und Styrol sind dabei nicht enthalten.

Je nach Art des beabsichtigten Einsatzes des Beschichtungsmaterials als Putz, Farbe oder Lack ändert sich die Zusammensetzung und der Mengenanteil der Zuschlagstoffe, die aus natürlichen, mineralischen Füllstoffen und Pigmenten, wie z.B. Calciumcarbonat, Aluminiumsilikat, Schwerspat, Talkum oder Glimmer in bevorzugten Körnungsgrößen von 0 bis 6 mm oder auch aus künstlich hergestellten Füllstoffen und Pigmenten wie z.B. Titandioxid, Eisenoxid oder Glas bestehen und auch in Form von Hohlkörpern mit einem spezifischen Gewicht $\angle$ als 1 gebildet sein können.

Nachstehend sind bevorzugte Beispiele für den unterschiedlichen Einsatz des erfindungsgemäßen Beschichtungsmaterials als Putz, waschbeständige Innen- oder Außen-Farbe oder Dispersions-Lackfarbe aufgeführt.

Beispiele

1. <u>Pulverfarbe nach DIN 53 778, waschbeständig für</u>

   <u>Innen und Außen</u>

   | | | |
   |---|---|---|
   | 25,00 Gew.T | | Dispersionspulver auf Basis Vinyl acetat-Vinyllaurat mit MFT (Mindestfilmbildtemperatur) $<5°C$, |
   | 0,9 | " | Polysaccharidverdicker, |
   | 0,2 | " | Tetrakaliumpyrophosphat, |
   | 0,6 | " | Entschäumer (amorphe Kieselsäure), |
   | 6,0 | " | Aluminiumsilikat (Kaolin), |
   | 30,0 | " | Titandioxid, |
   | 19,0 | " | Magnesiumsilikat (Talkum), |
   | <u>18,3</u> | " | Marmormehl 0 - 20 µm |
   | 100.0 | | |
   | ======= | | |

Nach Vermischen mit Wasser im Verhältnis 1 : 1 ergibt sich eine hochwertige Farbe, die der DIN 53 778 entspricht und für Innen- und Außenanwendung geeignet ist.

2. <u>Kunstharzputz nach DIN 18 558</u>

| | | |
|---|---|---|
| 6,6 Gew.T. | | Dispersionspulver auf Basis Vinyl-acetat-Vinylversatat mit MFT $\angle$ 5°C, |
| 0,3 | " | Polysaccharidverdicker, |
| 44,0 | " | Marmorkern 0,5 - 2, |
| 44,0 | " | Marmormehl 0 - 500 µm, |
| 5,0 | " | Titandioxid, |
| 0,1 | " | Zellulosefaser $<$ 1 mm |
| 100.0 | | |

Nach Vermischen mit 22 Gew.% Wasser erhält man einen Kunstharzputz, der sich zu einer Kratzputz-struktur strukturieren läßt.

3. <u>Dispersionslackfarbe nach DIN 55 945</u>

| | | |
|---|---|---|
| 60,0 Gew.T | | Dispersionspulver auf Basis Vinyl-acetat-Vinylversatat-Vinyllaurat mit MFT $\angle$ 5°C, |
| 0,8 | " | Polysaccharidverdicker, |
| 0,4 | " | Tetrakaliumpyrophosphat, |
| 1,0 | " | Entschäumer (amorphe Kieselsäure), |
| 35,8 | " | Titandioxid, |
| 2,0 | " | Magnesiumsilikat (Talkum). |

100,0
=========

Nach Verrühren der Pulvermischung mit Wasser im Verhältnis 1 : 1 erhält man eine seidenglänzende Dispersionslackfarbe, die für den Einsatz im Innen- und Außenbereich geeignet ist.

Patentansprüche:

1.    Pulveriges Baustoff-Beschichtungsmaterial, das nach Beigabe von Wasser unter Bildung einer Dispersion zum Beschichten von Baustoffen verwendbar ist und ein organisches Bindemittel mit einer natürlichen Filmbildungstemperatur unter 10°C, ein Verdickungsmittel auf Polysaccharidbasis und Zuschlagstoffe enthält, d a d u r c h   g e k e n n z e i c h n e t , daß zur anschließenden Beigabe von Wasser ohne sonstige Lösungsmittel unter Ausschluß von mineralisch abbindenden Bindemitteln, wie z.B. Zement, Kalk, Gips oder Wasserglas, sowie von Konservierungsmitteln 5 bis 70 Gew.% des pulverigen organischen Bindemittels  und 0,1 bis 3 Gew.-% Xanthan-Gum oder Guar-Derivat als Verdickungsmittel Anwendung finden.

2.    Beschichtungsmaterial nach Anspruch 1, d a d u r c h   g e k e n n z e i c h n e t , daß als pulveriges, organisches Bindemittel ein Copolymer des Vinylacetats, *Vinyllaurats oder Acryl- bzw. Methacrylester eingesetzt wird.

3.    Beschichtungsmaterial nach Anspruch 1 oder 2, d a d u r c h   g e k e n n z e i c h n e t , daß bei Einsatz in Form eines Putzes folgende Zusammensetzung gewählt ist:

4 bis 10, vorzugsweise 6,6 Gew.% Dispersionspulver auf Basis Vinylacetat-Vinylversatat mit $MFT < 5°C$,

0,1 bis 0,6, vorzugsweise 0,3 Gew.% Polysaccharidverdicker,

* Vinylversatats

0 - 5, vorzugsweise 0,5 Gew.% Titandioxid,

0 - 1, vorzugsweise 0,1 Gew.% Cellulosefaser < 1 mm.

35 - 50, vorzugsweise 44,0 Gew.% Marmorkorn 0,5 bis
2 mm,

35 - 50, vorzugsweise 44,0 Gew.% Marmormehl
0 bis 500 µm.

4. Beschichtungsmaterial nach Anspruch 1 oder 2, d a d u r c h   g e k e n n z e i c h n e t, daß bei Einsatz in Form einer waschbeständigen Innen- oder Außenfarbe folgende Zusammensetzung gewählt ist:

15 - 35, vorzugsweise 25 Gew.% Dispersionspulver
auf Basis Vinylacetat-Vinylversatat-
Vinyllaurat mit MFT < 5°C,

0,5 - 1,5, vorzugsweise 0,9 Gew.% Polysaccharidverdicker,

0,05 - 1, vorzugsweise 0,2 Gew.% Tetrakaliumpyrophosphat,

0,2 - 1,5, vorzugsweise 0,6 Gew.% Entschäumer
(amorphe Kieselsäure,

1 - 10, vorzugsweise 6,0 Gew.% Aluminiumsilicat
(Karolin),

10 - 40, vorzugsweise 30 Gew.% Titandioxid,

10 - 30, vorzugsweise 19,0 Gew.% Magnesiumsilicat (Talkum)

10 - 30, vorzugsweise 18,3 Gew.% Marmormehl 0 bis
20 µm.

5. Beschichtungsmaterial nach Anspruch 1 oder 2, d a d u r c h  g e k e n n z e i c h n e t, daß bei Einsatz in Form einer Dispersionslackfarbe folgende Zusammensetzung gewählt ist:

35 - 70, vorzugsweise 60 Gew.% Dispersionspulver auf Basis Vinylacetat-Vinylversatat-Vinyllaurat mit MFT $\angle$ 5°C,

0,5 - 1,3, vorzugsweise 0,8 Gew.% Polysaccharidverdicker,

0,1 - 1, vorzugsweise 0,4 Gew.% Tetrakaliumpyrophosphat,

0,2 - 2, vorzugsweise 1,0 Gew.% Entschäumer (amorphe Kieselsäure),

25 - 50, vorzugsweise 35,8 Gew.% Titandioxid,

0,5 - 5, vorzugsweise 2,0 Gew.% Magnesiumsilicat (Talkum).

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 287 290 (W.J. BRAY) <br> * Patentansprüche; Spalte 7, Zeilen 21-31; Spalte 3, Beispiel * | 1,2 | C 04 B 41/48 <br> C 04 B 26/04 <br> C 09 D 3/00 // <br> C 08 L 31/04 <br> (C 04 B 26/04 <br> C 04 B 14:28 |
| A | | 3-5 | C 04 B 14:30 <br> C 04 B 18:24 <br> C 04 B 24:38 ) |
| Y | --- <br> FR-A-1 453 251 (E. NOUHAUD) <br> * Patentansprüche 1,2 * | 1,2 | |
| A | --- <br> KUNSTSTOFFTECHNIK, Band 10, Nr. 4, April 1971, Seiten 138-139, Mainz, DE; G. ILLING: "Wasserdispergierbares Polyvinylacetatpulver" <br> * Seite 139, rechte Spalte, Zeilen 23-26 * | 1,2,4, 5 | RECHERCHIERTE SACHGEBIETE (Int. Cl.4) |
| A | --- <br> US-A-3 700 612 (J. FATH et al.) <br> * Patentansprüche 1,3,5; Beispiel 3 * | 1,2,4, 5 | C 04 B 41/00 <br> C 04 B 26/00 <br> C 09 D 3/00 <br> C 08 L 31/00 |
| A | --- <br> US-A-3 891 453 (T.L. WILLIAMS) <br> * Beispiel 14 * | 1 | |
| A | --- <br> DE-A-2 158 604 (U.V.A. VERWALTUNGSANSTALT) <br> * Patentansprüche 1,2 * | 1-3 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 15-04-1987 | DAELEMAN P.C.A. |